# EUROPEAN PATENT SPECIFICATION

(11) **EP 3 269 249 B1**
(45) Date of publication and mention of the grant of the patent: **24.04.2019**
(21) Application number: 17178443.2
(22) Date of filing: 28.06.2017
(51) Int. Cl.: A23G 1/00, A23G 1/54

(54) **METHOD OF MAKING A CONFECTIONERY SHELL**
VERFAHREN ZUR HERSTELLUNG EINER SÜSSWARENHÜLLE
PROCÉDÉ DE RÉALISATION D'UNE COQUILLE DE CONFISERIE

(30) Priority: 13.07.2016 GB 201612147
(43) Date of publication of application: 17.01.2018
(73) Proprietor: MAGNA SPECIALIST CONFECTIONERS LIMITED, Shropshire TF3 3BH (GB)
(72) Inventor: Smart, Ian, Shropshire, TF3 3BH (GB); McHale, Robert Philip Harry, Shropshire, TF3 3BH (GB)
(74) Representative: Connell, Mark

(56) References cited:
- EP-A1- 0 589 820
- EP-A1- 2 386 208
- EP-A1- 2 543 259
- EP-A1- 2 543 260
- EP-A2- 1 444 900
- EP-A2- 1 444 901
- FR-A1- 2 604 651
- FR-A1- 2 764 779

## Description

The present invention relates to a method of making a confectionery shell, in particular a confectionery shell made from a plurality of layers each made from a different confectionery substance.

It is known to make confectionery shells, in particular chocolate shells, by depositing a shot of molten chocolate into a cavity of a mould in the shape of half an egg, and pushing a chilled stamp into the mould so that the molten chocolate flows into the space between the mould and the stamp and sets to form a solid shell as the molten chocolate cools. This process is known as the frozen cone method, and is described in EP 0589820, for example.

It is also known to make chocolate shells by dipping a chilled male mould into a vat of molten chocolate so that a layer of chocolate solidifies on the mould surface. Such a dip-forming method is disclosed in EP 1 103 188, EP 1 444 900, EP 1 444 901 and FR2764779.

It is also known to make confectionery shells from a plurality of layers each made from a different composition of confectionery substance.

For example, EP 0 589 820 discloses the idea of making a double-layer chocolate shell by depositing a shot of molten chocolate of a second type or composition into a chocolate shell made from a first type or composition of chocolate using the frozen cone method. A second chilled stamp, which is slightly smaller than the stamp used to make the shell from the first type of chocolate is then inserted into the mould cavity so that the chocolate in the second shot flows into the cavity between the chocolate shell and the stamp and solidifies to form an internal coating on the internal surface of the chocolate shell.

EP2543259 discloses a method of producing a multi-layered confectionary shell where the distance the stamp is pressed into the mould cavity in a second phase is shorter than the distance the stamp is pressed into the mould cavity in a first phase.

An alternative method of making a double-layer chocolate shell is disclosed in EP 2 386 208. This describes depositing a first edible liquid into a mould cavity, depositing at least one other edible liquid onto the first edible liquid in the mould cavity, and pressing the edible liquids into the mould cavity using a stamp cooled so that its surface temperature is below the solidification temperature of the edible liquids. This process has the advantage over the process described in EP0589820 that only one chilled stamp is required. However, in order for this process to be successful, the viscosities of the two edible liquids must be relatively tightly controlled, and very similar to one another. This process is, therefore, limited in terms of the compositions of confectionery substances for which it can be used.

EP2543260 discloses a method of manufacturing an aerated confectionary shell comprising the steps of aerating an edible liquid; depositing the aerated edible liquid into a mould cavity; and pressing the aerated edible liquid in the mould cavity using a stamp to form an aerated shell layer.

It is also known to make a double-layer chocolate shell using the dipping technique described above, by dipping the coated mould member into a reservoir containing a different composition of molten chocolate. The thickness and uniformity of the two chocolate layers cannot be well controlled using this method, however.

The present invention relates to an alternative method of making a multi-layer confectionery shell.

According to a first aspect of the invention we provide a method of making a confectionery shell comprising the steps of:
a) dipping a chilled mould member into a reservoir of liquid confectionery substance having a first composition,
b) removing the chilled mould member from the reservoir, there being a layer of confectionery substance of the first composition retained on the surface of the die,
characterised by:
c) depositing in a mould cavity a shot of liquid confectionery substance having a second composition,
d) pressing the liquid confectionery substance of the second composition into the mould cavity using the chilled mould member with its retained layer of confectionery substance of the first composition to form a layered shell having an inner layer formed from the first composition of confectionery substance and an outer layer formed from the second composition of confectionery substance,
e) removing the chilled mould member from the mould cavity.

In one embodiment of the invention, the steps set out in claim 1 are carried out in the order set out in claim 1. It should be appreciated, however, that step c may equally be carried out before or during steps a or b.

In one embodiment of the invention, at least one of the confectionary substances is fat-based.

In one embodiment of the invention at least one of the liquid confectionery substances is molten chocolate.

In one embodiment of the invention at least one of the liquid confectionery substances is molten tempered chocolate.

The method further include the steps of:
f) allowing the double-layer shell to cool in the mould cavity, and
g) removing the double-layer shell from the mould cavity once solidified.

In one embodiment of the invention, the mould member is cooled to below - 5°C.

In one embodiment of the invention, the mould member is cooled to below - 20°C.

In one embodiment of the invention, the chilled mould member is held in the reservoir of molten confectionery substance of the first composition for less than 5 seconds.

In one embodiment of the invention, the chilled die is held in the reservoir of molten confectionery substance of the first composition for less than 2 seconds.

The method may also include the steps of, after carrying out steps a and b, but before carrying out steps d and e, dipping the mould member with its retained layer of confectionery substance of the first composition into a reservoir of liquid confectionery substance having a third composition, and removing the mould member from the reservoir, there being a layer of confectionery substance of the third composition retained on the surface of the layer of confectionery substance of the first composition.

Embodiments of the invention will now be described with reference to the accompanying figures, of which,
FIGURE 1 is a schematic illustration of steps a and b of the inventive method,
FIGURE 2 is a schematic illustration of steps c, d and e of the inventive method,
FIGURE 3 is a schematic illustration of steps f and g of the inventive method.

Referring now to the figures, there is illustrated schematically a method of making a confectionery shell, in particular a double layer shell comprising an inner layer made from a confectionery substance having a first composition, and an outer layer made from a confectionery substance having a second composition. Advantageously, both the confectionery substances are fat-based compositions. In a preferred embodiment of the invention, both the confectionery substances are chocolate. For example, the confectionery substance having the first composition may be white chocolate and the confectionery substance having the second composition may be milk or dark chocolate.

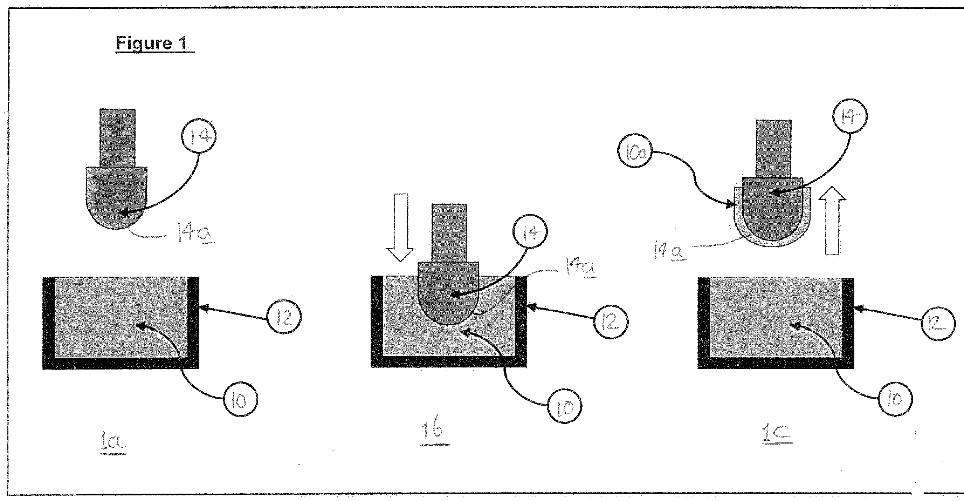

The confectionery substance having the first composition 10 (hereinafter referred to as the first confectionery substance) is provided in liquid / molten form in a reservoir 12, preferably a temperature controlled bath. This is illustrated in Figure 1a. In a preferred embodiment of the invention, the confectionery substance 10 contained in the reservoir 12 is molten tempered chocolate.

A chilled mould member 14 is dipped into the reservoir 12 so that a shaped end 14a of the mould member 14 becomes coated with a layer 10a of confectionery substance having the first composition 10. The mould member 14 is typically a male mould member, with the shaped end 14a having a surface which corresponds to the desired shape of the interior surface of the shell. In this embodiment the mould member 14 has curved end 14a for use in forming a shell in a half-egg shape.

The mould member 14 is cooled to below -5°C. In one embodiment of the invention, the mould member 14 is cooled to below -20°C. The mould member is preferably metallic and may be cooled using the methods employed in known dip moulding processes such as those described in EP 1 103 188, EP1 44 900 or EP 1 444 901, or in known frozen cone moulding processes such as those described in EP0 589 820 or EP2 386 208.

The chilled mould member 14 is removed from the reservoir 12 after sufficient time has elapsed for a layer of the first confectionery substance of the desired thickness to have solidified, or at least become semi-solidified, on the shaped end 14a thereof. This is illustrated in Figures 1b and 1 c.

Typically, the mould member 14 is retained in the reservoir 12 for less than 5 seconds. In a preferred embodiment of the invention, the mould member 14 is retained in the reservoir for less than 2 seconds.

It will be appreciated that the thickness of the layer 10a formed on the chilled mould member 14 will depend on how long the mould member 14 is held in the reservoir 12 (the dwell time). To form a thinner layer 10a, the dwell time is decreased, whilst a thicker layer 10a can be formed by increasing the dwell time.

Preferably the mould member 14 is moved vertically into and out of the reservoir, for example using the same kind of mechanism as used in the prior art dip-forming methods, such as those disclosed in EP 1 103 188, EP 1 444 900 and EP 1 444 901.

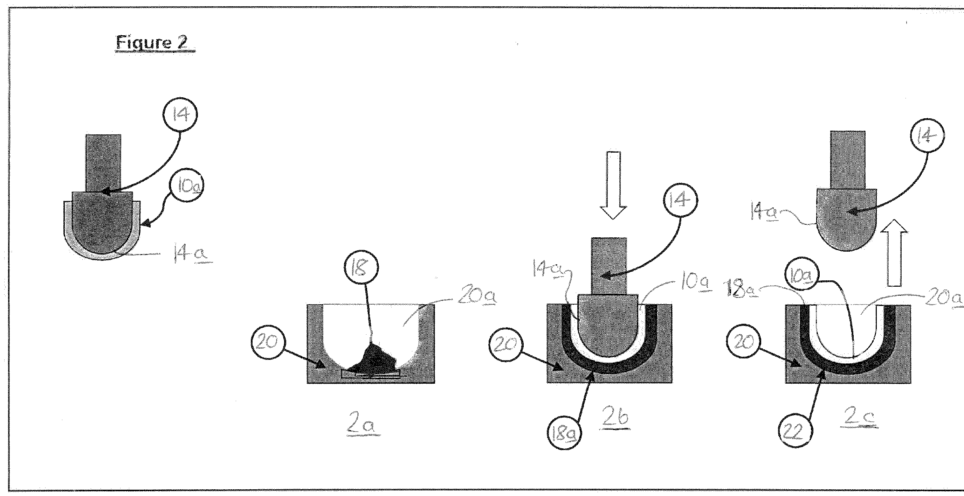

Either before, during or (most likely) after the dipping process described in relation to Figure 1 is/has been carried out, a shot of liquid confectionery substance having a second composition 18 is deposited in the mould cavity 20a of a mould 20, using standard deposition apparatus such as those employed in the methods disclosed in EP 0 589 820 or EP 2 386 298. This is illustrated in Figure 2a.

The shot of liquid confectionery substance of the second composition 18 (hereinafter referred to as the second confectionery substance) is then pressed into the mould cavity 20a using the chilled mould member 14 with its retained layer 10a of first confectionery substance 10. Advantageously this takes place less than 10 seconds after the removal of the mould member 14 from the reservoir 12, and more preferably within 5 seconds. This process is illustrated in Figure 2b.

In a preferred embodiment of the invention, the shot of confectionery substance 18 deposited into the mould cavity 20a is molten tempered chocolate.

The mould member 14 is pushed vertically downwardly into the mould cavity 20a, and the movement of the mould member 14 controlled (for example using a stepper motor) such that the liquid confectionery substance of the second composition flows into the gap created between the layer of semi-solid / solid first confectionery substance and the mould 20 to form a layer of second confectionery substance 18a.

After the second confectionery substance 18a has solidified / semi-solidified, the mould member 14 is then withdrawn from the mould cavity 20a. Preferably the mould member 14 is removed vertically upwardly. Advantageously, the mould member 14 is held in the mould cavity 20a for no more than 5 seconds, and in a preferred embodiment of the invention, for no more than 2 seconds. The layer of second confectionery substance 18a adheres to the layer of first confectionery substance 10a to form a double-layered shell 22 having an inner layer 10a formed from the first confectionery substance and an outer layer 18a formed from the second confectionery substance, the shell 22 left in the mould cavity 20a after the mould member 14 is withdrawn. This is illustrated in Figure 2c.

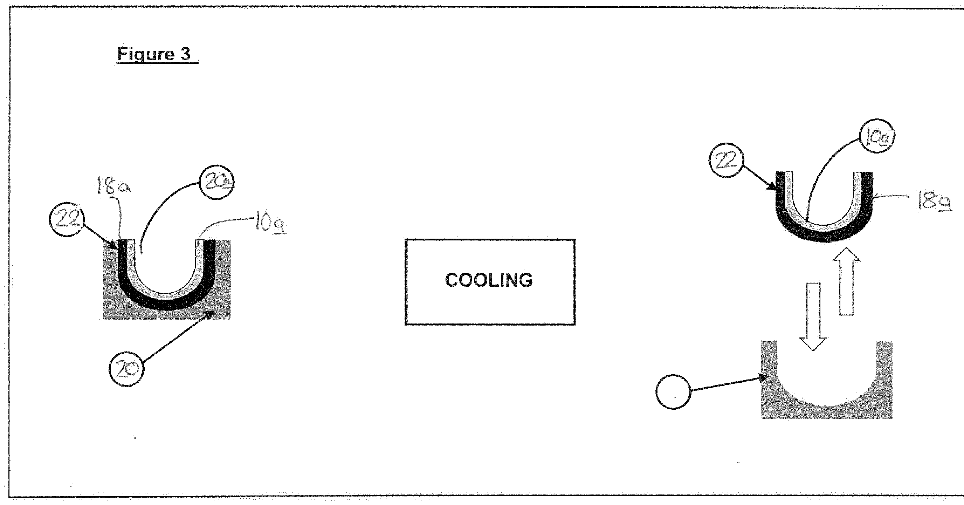

The double-layered shell 22 is then allowed to cool in the mould cavity, before being removed once completely solidified, as illustrated in Figure 3. Any conventional cooling regime, used in the solidification of conventional products made from the confectionery substances in question may be employed. It has been found that the contraction of the shell 22 which occurs as it cools and completely solidifies facilitates easy removal of the shell 22 from the mould 20.

It will be appreciated that the thickness of the shell 22 can be controlled to a good degree of accuracy (particularly compared to the prior art double-dip method) by the control of the separation of the mould member 14 from the mould 20 when the mould member 14 comes to a rest.

The mould 20 and mould member 14 may be appropriately shaped to form half-egg shaped shell. It will be appreciated, however, that this need not be the case, the mould 20 and mould member 14 may be shaped to form more complicated shapes of shell. For example, the inventive method may be employed to form double-layered shells in the shapes of animals or other characters.

It should also be appreciated, that any conventional method of filling a confectionery shell may be applied to a shell 22 produced by the inventive method. A layered shell 22 produced by the inventive method may, for example, be filled with a fondant or mousse filling using conventional deposition methods.

In the process described above, it is the mould member 14 which is moved to dip its end surface 14a into the first confectionery substance 10 in the reservoir 12, and the mould member 14 which is moved into the mould cavity 20a. It will be appreciated, however, that in both cases any relative movement of the mould member and reservoir 12/ mould 20 would be effective, and the invention could equally be implemented by moving the reservoir 12 and/or mould 20 instead of or in addition to the mould member 14.

Whilst the invention has been described in relation to the production of a double-layered shell, it could equally be used in the production of a shell with more than two layers. This could be achieved by, after removing the mould member 14 from the reservoir 12 of first confectionery substance 10, dipping the mould member 14 with its retained layer of first confectionery substance 10a into a reservoir of liquid confectionery substance having a third composition, and removing the mould member 14 from the reservoir, there being a layer of confectionery substance of the third composition retained on the surface of the layer of first confectionery substance 10a. The mould member 14, now with its retained double layer of first and third confectionery substances can then be pushed into the shot of second confectionery substance in the mould cavity 20a, and the shell formation process completed as described above. This will, of course, produce a triple-layered shell. This process could be repeated with further reservoirs of confectionery substances to produce shells with even more layers.

Moreover, whilst the invention has been described in relation to the production of a double-layered chocolate shell 22, the confectionery substances used could be any other form of fat-based confectionery substance. For example, the first confectionery substance could be a substance which acts as a barrier to prevent a filling from spoiling the confectionery substance in the outer layer or layers. The use of such a barrier layer could, for example, facilitate filling a shell with a chocolate outer layer 18a with a peanut butter based filling.

Any of the confectionery substances into which the mould member 14 is dipped may contain inclusions such as popping candy, or small pieces of chopped nuts or praline.

When used in this specification and claims, the terms "comprises" and "comprising" and variations thereof mean that the specified features, steps or integers are included. The terms are not to be interpreted to exclude the presence of other features, steps or components.

## Claims

1. A method of making a confectionery shell comprising the steps of:
a) dipping a chilled mould member into a reservoir of liquid confectionery substance having a first composition,
b) removing the chilled mould member from the reservoir, there being a layer of confectionery substance of the first composition retained on the surface of the mould member, **characterised by**:
c) depositing in a mould cavity a shot of liquid confectionery substance having a second composition,
d) pressing the liquid confectionery substance of the second composition into the mould cavity using the chilled mould member with its retained layer of confectionery substance of the first composition to form a layered shell having an inner layer formed from the first composition of confectionery substance and an outer layer formed from the second composition of confectionery substance,
e) removing the chilled mould member from the mould cavity.

2. A method according to claim 1 wherein the steps are carried out in the order set out in claim 1.

3. A method according to claim 1 wherein step c is carried out before or during either steps a or b.

4. A method according to claim 1, 2 or 3 wherein at least one of the confectionary substances is fat-based.

5. A method according to claim 4 wherein at least one of the liquid confectionery substances is molten chocolate.

6. A method according to claim 5 wherein at least one of the liquid confectionery substances is molten tempered chocolate.

7. A method according to any preceding claim wherein the method includes the steps of:
f) allowing the layered shell to cool in the mould cavity, and
g) removing the layered shell from the mould cavity once solidified.

8. A method according to any preceding claim wherein the mould member is cooled to below -5°C.

9. A method according to claim 8 wherein the mould member is cooled to below -20°C.

10. A method according to any preceding claim wherein the chilled mould member is held in the reservoir of molten confectionery substance of the first composition for less than 5 seconds.

11. A method according to claim 10 wherein the chilled mould member is held in the reservoir of molten confectionery substance of the first composition for less than 2 seconds.

12. A method according to any preceding claim further including the steps of, after carrying out steps a and b, but before carrying out steps d and e, dipping the mould member with its retained layer of confectionery substance of the first composition into a reservoir of liquid confectionery substance having a third composition, and removing the mould member from the reservoir, there being a layer of confectionery substance of the third composition retained on the surface of the layer of confectionery substance of the first composition.

## Patentansprüche

1. Verfahren zur Herstellung einer Süßwarenhülle, umfassend die folgenden Schritte:
a) Eintauchen eines gekühlten Formteils in einen Behälter von flüssiger Süßwarensubstanz mit einer ersten Zusammensetzung,
b) Entfernen des gekühlten Formteils aus dem Behälter, wobei eine Schicht an Süßwarensubstanz der ersten Zusammensetzung auf der Oberfläche des Formteils zurückgehalten wird, **gekennzeichnet durch**:
c) Abscheiden, in einem Formhohlraum, eines Schusses an flüssiger Süßwarensubstanz mit einer zweiten Zusammensetzung,
d) Pressen der flüssigen Süßwarensubstanz der zweiten Zusammensetzung in den Formhohlraum unter Verwendung des gekühlten Formteils mit seiner zurückgehaltenen Schicht an Süßwarensubstanz der ersten Zusammensetzung, um eine geschichtete Hülle mit einer aus der ersten Süßwarensubstanz-Zusammensetzung gebildeten inneren Schicht und einer aus der zweiten Süßwarensubstanz-Zusammensetzung gebildeten äußeren Schicht zu bilden,
e) Entfernen des gekühlten Formteils aus dem Formhohlraum.

2. Verfahren nach Anspruch 1, worin die Schritte in der in Anspruch 1 dargelegten Reihenfolge ausgeführt werden.

3. Verfahren nach Anspruch 1, worin Schritt c vor oder während Schritt a oder b ausgeführt wird.

4. Verfahren nach Anspruch 1, 2 oder 3, worin mindestens eine der Süßwarensubstanzen fettbasiert ist.

5. Verfahren nach Anspruch 4, worin mindestens eine der flüssigen Süßwarensubstanzen geschmolzene Schokolade ist.

6. Verfahren nach Anspruch 5, worin mindestens eine der flüssigen Süßwarensubstanzen geschmolzene temperierte Schokolade ist.

7. Verfahren nach einem vorhergehenden Anspruch, worin das Verfahren die folgenden Schritte beinhaltet:
f) Zulassen dessen, dass die geschichtete Hülle in dem Formhohlraum abkühlen kann, und
g) Entfernen der geschichteten Hülle aus dem Formhohlraum nach dem Erstarren.

8. Verfahren nach einem vorhergehenden Anspruch, worin das Formteil auf unterhalb von -5 °C abgekühlt wird.

9. Verfahren nach Anspruch 8, worin das Formteil auf unterhalb von -20 °C abgekühlt wird.

10. Verfahren nach einem vorhergehenden Anspruch, worin das gekühlte Formteil weniger als 5 Sekunden lang in dem Behälter von geschmolzener Süßwarensubstanz der ersten Zusammensetzung gehalten wird.

11. Verfahren nach Anspruch 10, worin das gekühlte Formteil weniger als 2 Sekunden lang in dem Behälter von geschmolzener Süßwarensubstanz der ersten Zusammensetzung gehalten wird.

12. Verfahren nach einem vorhergehenden Anspruch, ferner beinhaltend die Schritte, nach dem Ausführen von Schritt a und b, aber vor dem Ausführen von Schritt d und e, des Eintauchens des Formteils mit seiner zurückgehaltenen Schicht an Süßwarensubstanz der ersten Zusammensetzung in einen Behälter von flüssiger Süßwarensubstanz mit einer dritten Zusammensetzung und des Entfernens des Formteils aus dem Behälter, wobei eine Schicht an Süßwarensubstanz der dritten Zusammensetzung auf der Oberfläche der Schicht an Süßwarensubstanz der ersten Zusammensetzung zurückgehalten wird.

## Revendications

1. Un procédé de fabrication d'une coquille de confiserie, comprenant les étapes consistant à :
a) plonger un élément refroidi faisant moule dans un réservoir de substance de confiserie liquide ayant une première composition,
b) retirer l'élément refroidi faisant moule du réservoir, une couche de substance de confiserie étant retenue à la surface de l'élément faisant moule, **caractérisé par** :
c) déposer dans une cavité faisant moule une dose de substance de confiserie liquide ayant une deuxième composition,
d) presser la substance de confiserie liquide de la deuxième composition dans la cavité faisant moule à l'aide de l'élément refroidi faisant moule avec sa couche retenue de substance de confiserie de la première composition pour former une coquille stratifiée présentant une couche intérieure formée de la première composition de substance de confiserie et une couche extérieure formée de la deuxième composition de substance de confiserie ,
e) retirer l'élément refroidi faisant moule de la cavité faisant moule.

2. Un procédé selon la revendication 1 dans lequel les étapes sont exécutées dans l'ordre indiqué dans la revendication 1.

3. Un procédé selon la revendication 1 dans lequel l'étape c est exécutée avant ou pendant les étapes a ou b.

4. Un procédé selon les revendications 1, 2 ou 3 dans lequel au moins une des substances de confiserie est à base de graisse.

5. Un procédé selon la revendication 4 dans lequel au moins une des substances de confiserie liquides est du chocolat fondu.

6. Un procédé selon la revendication 5 dans lequel au moins une des substances de confiserie liquides est du chocolat fondu tempéré.

7. Un procédé selon n'importe quelle revendication précédente, le procédé comprenant les étapes consistant à :
f) permettre à la coquille stratifiée de refroidir dans la cavité faisant moule, et
g) retirer la coquille stratifiée de la cavité faisant moule une fois solidifiée.

8. Un procédé selon n'importe quelle revendication précédente dans lequel l'élément faisant moule est refroidi jusqu'à une température inférieure à -5° C.

9. Un procédé selon la revendication 8 dans lequel l'élément faisant moule est refroidi jusqu'à une température inférieure à -20° C.

10. Un procédé selon n'importe quelle revendication précédente dans lequel l'élément faisant moule refroidi est maintenu dans le réservoir de substance de confiserie fondue de la première composition pendant moins de 5 secondes.

11. Un procédé selon la revendication 10 dans lequel l'élément faisant moule refroidi est maintenu dans le réservoir de substance de confiserie fondue de la première composition pendant moins de 2 secondes.

12. Un procédé selon n'importe quelle revendication précédente comprenant en sus les étapes consistant à, après avoir exécuté les étapes a et b, mais avant d'exécuter les étapes de et e, plonger l'élément faisant moule avec sa couche retenue de substance de confiserie de la première composition dans un réservoir de substance de confiserie liquide ayant une troisième composition, et retirer l'élément faisant moule du réservoir, une couche de substance de confiserie de la troisième composition étant retenue à la surface de la couche de substance de confiserie de la première composition.
